# FASCICULE DE BREVET EUROPEEN

(11) **EP 1 736 674 B1**
(45) Date de publication et mention de la délivrance du brevet: **27.02.2008**
(21) Numéro de dépôt: 06115909.1
(22) Date de dépôt: 22.06.2006
(51) Int. Cl.: F16C 7/00, B29C 70/24

(54) **Pièce méchanique et procédé de fabrication d'une telle pièce**
Mechanisches Teil und Herstellungsverfahren eines solchen Teils
Mechanical part and process to manufacture such a part

(30) Priorité: 24.06.2005 FR 0506441
(43) Date de publication de la demande: 27.12.2006
(73) Titulaire: SNECMA, 75015 Paris (FR)
(72) Inventeur: Coupe, Dominique, 33185 Le Haillan (FR); Dambrine, Bruno, 77820 Le Chatelet en Brie (FR); Lacorre, Fabienne, 77000 Vaux le Penil (FR); Madec, Alain, 77590, Chartrettes (FR); Mahieu, Jean-Noël, 75013 Paris (FR)
(74) Mandataire: Barbin le Bourhis, Joël

(56) Documents cités:
- EP-A- 0 678 681
- CH-A5- 652 176
- DE-A1- 3 204 093
- FR-A- 2 543 054
- FR-A- 2 565 262
- US-A- 4 268 560
- US-A- 4 659 069
- PATENT ABSTRACTS OF JAPAN vol. 007, no. 279 (M-262), 13 décembre 1983 (1983-12-13) & JP 58 156714 A (YANMAR DIESEL KK), 17 septembre 1983 (1983-09-17)

## Description

L'invention a pour objet une pièce mécanique destinée à être articulée avec d'autres pièces à ses extrémités, et un procédé de fabrication d'une telle pièce.

Plus particulièrement, l'invention peut concerner un levier de contre-fiche de train d'atterrissage.

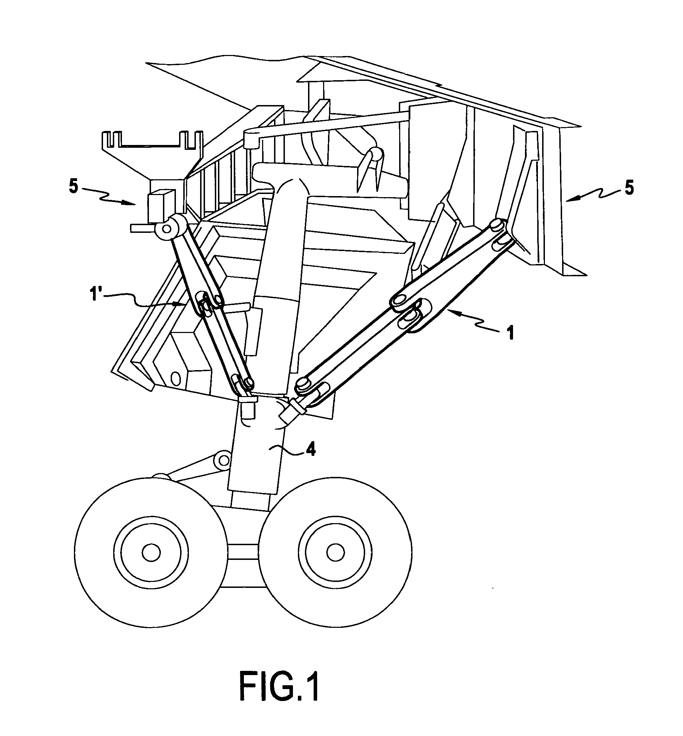

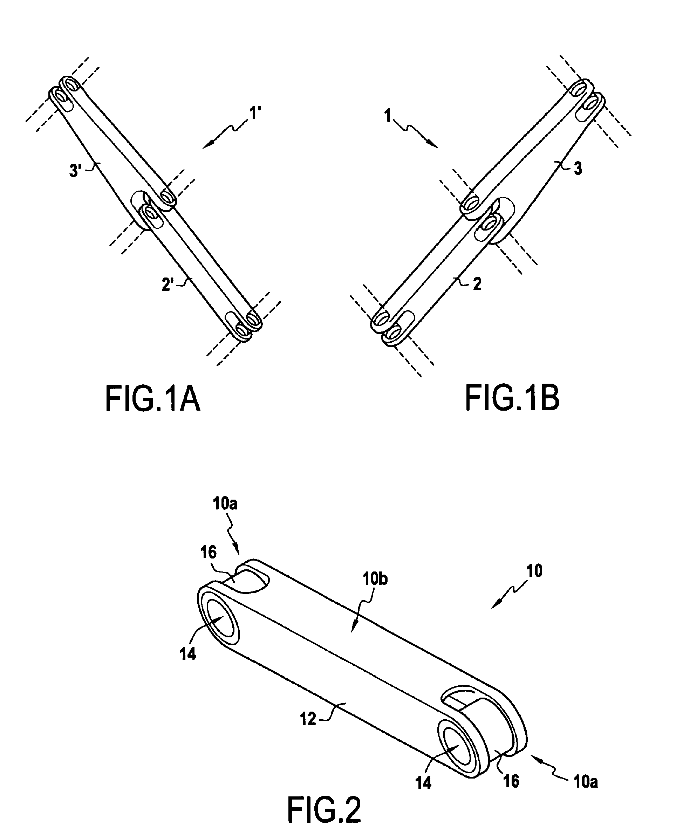

La figure 1 montrent un train d'atterrissage comprenant deux contrefiches 1 et 1', respectivement appelées contrefiche principale et contrefiche latérale, et représentées en détail sur les figures 1B et 1A. Ces contrefiches sont articulées à la jambe 4 du train d'atterrissage et au châssis 5 du train d'atterrissage. Chaque contre-fiche 1, 1' est formée de deux leviers : un levier supérieur 3, 3' et un levier inférieur 2, 2'. Les leviers d'une contrefiche sont articulés entre eux et à d'autres pièces du train d'atterrissage au niveau de leurs extrémités, par l'intermédiaire d'axes d'articulation symbolisés en traits mixtes sur les figures 1a et 1b.

De tels leviers connus sont soumis en fonctionnement à des efforts mécaniques importants, principalement en compression et en traction, orientés selon l'axe longitudinal de la pièce (axe passant par les deux extrémités de la pièce). Ces leviers sont réalisés dans des alliages d'aciers, d'aluminium ou de titane.

On connaît l'intérêt d'alléger ces leviers, pour faciliter le fonctionnement du train d'atterrissage. En outre, de manière générale, diminuer la masse de chaque pièce d'un aéronef est une préoccupation constante.

Les documents CH 652 176 A5,FR 2 543 054 et EP 0 678 681A1 proposent des pièces mécaniques, plus précisément des bielles, de faible masse car réalisées en matériau composite. Le document EP0678681A1 décrit une bielle en une seule pièce obtenue à partir de couches de fils préimprégnées de résine, superposées et assemblées. Le document FR 2 543 054 décrit une bielle réalisée à partir d'une partie centrale obtenue à partir de couches de fils préimprégnées de résine, superposées et assemblées, et d'une partie périphérique réalisée par bobinage d'un filament ou d'un ruban préimprégné de résine.

De tels matériaux composites sont toutefois propices au délaminage : à l'usage, les couches de fibres, les filaments ou les rubans, se désolidarisent les uns des autres, principalement à cause des efforts mécaniques répétés auxquels la pièce est soumise.

L'invention a pour but de proposer une pièce mécanique de faible masse qui résiste bien aux efforts.

Pour atteindre ce but, l'invention a pour objet une pièce mécanique selon la revendication 1.

La pièce de l'invention peut trouver une application dans de nombreux domaines, autres que l'aéronautique. Par exemple, elle peut être utilisée en tant que bielle. En outre, le nombre d'extrémité de la pièce et donc son nombre de points d'articulation potentiels, n'est pas limité à deux, ce qui élargit encore son champ d'application.

La pièce de l'invention en matériau composite est de poids limité par rapport aux pièces réalisées entièrement en métal. Avantageusement, ladite pièce est en matériau composite à matrice organique (et non métallique) et les préformes fibreuses sont réalisées en fibres de carbone, ce qui offre un bon compromis entre résistance mécanique et légèreté.

Par ailleurs, on évite les problèmes de délaminage rencontrés avec les pièces en matériau composite de l'art antérieur car ladite préforme centrale, comme ladite préforme périphérique, n'ont pas une structure lamifiée mais une structure en tissu tridimensionnel et les fibres tissées sont parfaitement solidaires les unes des autres.

Par ailleurs, contrairement à d'autres technologies plus limitées en épaisseur et géométrie, le tissage tridimensionnel offre une plus grande liberté pour la conception des pièces.

En outre, les préformes fibreuses centrale et périphérique tissées peuvent différer du point de vue de l'orientation générale des fibres, du taux de fibre (densité de fibre par unité de volume), de la répartition entre fibres (ou fils) de chaîne et fibres de trame et/ou du mode d'entrecroisement (ou embuvage) des fibres qui les constituent. En jouant sur ces différences, on fait en sorte que la partie centrale de la pièce présente des propriétés mécaniques différentes de celles de la partie périphérique. Ainsi, on adapte la résistance de chacune des parties de la pièce aux types d'efforts mécaniques (compression, traction, torsion, flambage...) auxquels elles sont principalement soumises en fonctionnement et la résistance globale de la pièce est ainsi améliorée.

Un autre avantage de la pièce de l'invention réside dans sa simplicité de fabrication : en utilisant deux préformes, il est possible de choisir pour celles-ci des formes simples, facilement réalisables par tissage tridimensionnel.

Ainsi, avantageusement, la préforme périphérique est une bande épaisse qui peut être fabriquée à plat et dont les extrémités sont jointes par la suite, pour former un anneau. La préforme centrale, elle, a une section spécifique, avantageusement en H, en I ou en X. Ces formes de section peuvent être obtenues facilement par des techniques de tissage tridimensionnel connues. On choisit la section de la préforme centrale afin d'obtenir, pour un volume de matière (fibres et résine) limité, une bonne résistance mécanique en compression entre les deux extrémités de la pièce, mais également en torsion et/ou en flambage.

Selon un mode particulier de réalisation de la pièce, celle-ci comprend des inserts formant paliers, logés dans les espaces libres servant à l'articulation avec d'autres pièces.

Ces inserts permettent de protéger contre l'usure les parois desdits espaces libres. Lorsque la pièce de l'invention est articulée à d'autres pièces par l'intermédiaire d'axes d'articulation, ces axes sont généralement en métal. Aussi, on peut choisir des inserts métalliques, afin d'assurer un contact métal/métal entre insert et axe.

Une alternative aux inserts consiste à revêtir les parois desdits espaces libres d'un revêtement anti-usure.

L'invention a également pour objet un procédé de fabrication d'une pièce mécanique selon la revendication 9.

On assemble entre elles les deux préformes fibreuses lorsqu'elles sont sèches, ce qui permet, d'une part, de manipuler un unique ensemble à imprégner de résine et, d'autre part, de renforcer la liaison entre ces préformes (liaison qui sera, par ailleurs, assurée à l'aide de la résine). On assemble les deux préformes fibreuses sèches par implantation de fils de liaison, chaque fil de liaison étant implanté de manière à traverser les deux préformes, au moins en partie.

Selon un mode de mise en oeuvre particulier, on dispose des inserts dans lesdits espaces libres avant d'imprégner l'ensemble de résine, ce qui permet à la résine d'adhérer aux inserts lors de son durcissement et de fixer ces derniers.

Selon un autre mode, on peut fixer ces inserts sur un corps de pièce préalablement réalisé, par rivetage, par collage ou par tout autre moyen de fixation approprié.

L'invention et ses avantages seront mieux compris à la lecture de la description détaillée qui suit, d'un exemple de réalisation d'une pièce mécanique selon l'inventian. Cette description fait référence aux figures annexées, sur lesquelles :
- la figure 1 représente un exemple de train d'atterrissage;
- la figure 1A représente en détail la contrefiche latérale du train d'atterrissage de la figure 1;
- la figure 1B représente en détail la contrefiche principale du train d'atterrissage de la figure 1;
- la figure 2 représente un exemple de pièce mécanique selon l'invention ;
- la figure 3A représente une bande de fibres tissées;
- la figure 3B représente la préforme fibreuse périphérique obtenue à partir de la bande de fibres de la figure 3A, et utilisée pour réaliser la pièce de la figure 2 ;
- la figure 4 représente la préforme fibreuse centrale utilisée pour réaliser la pièce de la figure 2 ;
- la figure 5 représente l'assemblage des préformes centrale et périphérique des figures 3B et 4, ainsi que deux inserts prêts à être montés sur cet assemblage ;
- la figure 6 représente un autre exemple de pièce mécanique selon l'invention ;
- la figure 7 est une coupe transversale en perspective selon le plan VII-VII de la figure 6; et
- les figures 8A à 8H représentent le séquençage (8 plans successifs) d'un exemple d'armature obtenue par tissage tridimensionnel.

Un exemple de pièce mécanique 10 selon l'invention est représenté figure 2. Cette pièce 10 peut être utilisée en tant que levier inférieur ou supérieur de contre-fiche d'un train d'atterrissage.

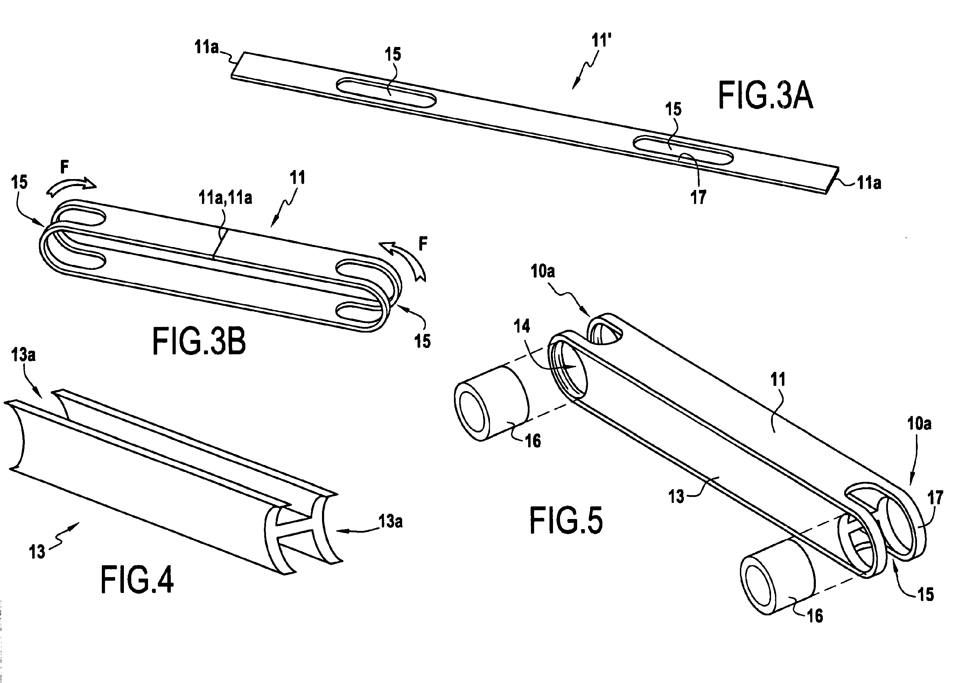

La pièce 10 comprend un corps 12 en matériau composite réalisé à partir des préformes fibreuses 11 et 13 représentées figures 3B et 4, comme l'illustre la figure 5.

La pièce 10 est une pièce longue et rectiligne avec deux extrémités 10a au niveau desquelles sont ménagés deux espaces libres 14 cylindriques. Les extrémités 10a ont une forme hémicylindrique tandis que la partie médiane 10b de la pièce 10 est de forme générale parallélépipédique.

Des inserts cylindriques creux 16 de diamètre correspondant à celui des espaces libres 14 sont logés à l'intérieur de ces derniers. Ces inserts 16 peuvent présenter une collerette (non représentée) sur au moins une de leurs extrémités. Ces inserts 16 sont destinés à être traversés par un axe permettant d'articuler la pièce 10 à d'autres pièces. L'axe et les inserts sont réalisés, par exemple, en alliage de titane, ce type d'alliage présentant un bon compromis entre résistance mécanique/thermique et légèreté. Par ailleurs, les frottements entre alliages de titane (et de manière générale les frottements entre métaux ou alliages) ont déjà été largement étudiés et sont aujourd'hui bien maîtrisés.

Les figures 3B et 4 représentent les préformes fibreuses 11 et 13 utilisées pour réaliser le corps 12 de la pièce 10. Ces préformes sont réalisées par tissage tridimensionnel de torons de fibres de carbone. Pour le tissage, on utilise les torons de fibres de carbones à la fois comme fils de chaîne et comme fils de trame.

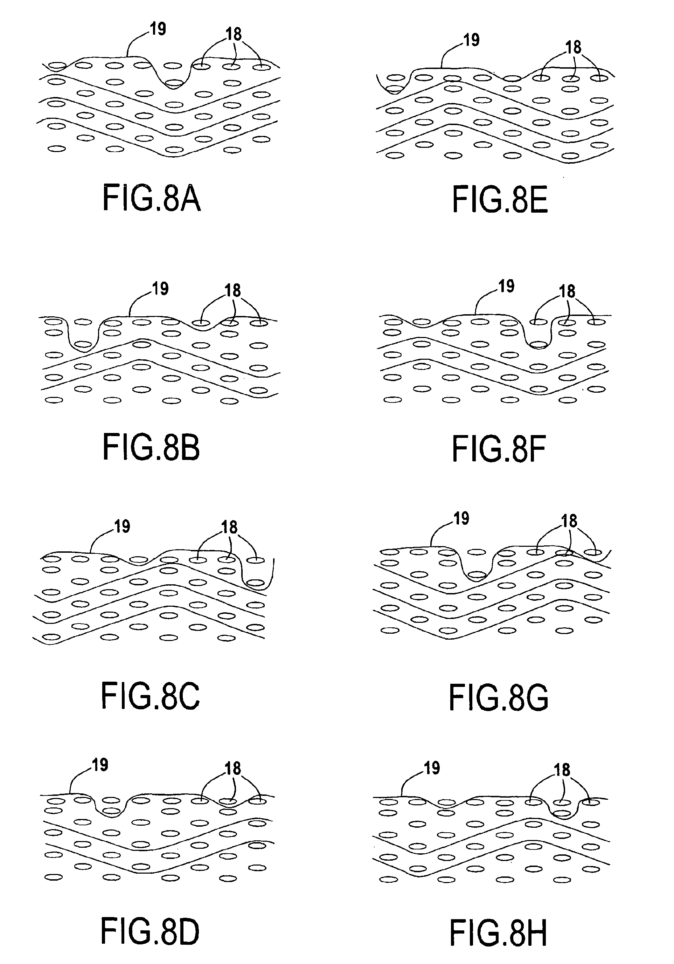

Les figures 8A à 8H représentent dans des plans successifs un exemple d'entrecroisement des fils de chaîne 19 et de trame 18 pour un tissage tridimensionnel. Pour un nombre limité de fils de trame 18 on a représenté les chemins empreintés par les fils de chaîne 19, entre les fils de trame 18. Dans chaque plan, ces chemins peuvent être sensiblement sinusoïdaux ou, comme représenté, plus complexes. Par ailleurs, ces chemins diffèrent généralement d'un plan de coupe à l'autre. Le type de tissage tridimensionnel retenu permet d'influer sur les propriétés mécaniques finales de la pièce. Aussi, avantageusement, le tissage utilisé pour la pièce centrale diffère de celui utilisé pour la pièce périphérique, ces pièces ayant des fonctions mécaniques différentes.

La préforme périphérique 11 représentée figure 3B est réalisée à partir d'une bande de fibres 11' suffisamment épaisse, dans laquelle deux ouvertures 15 sont ménagées. Ces ouvertures 15 sont optionnelles: leur présence dépend du mode d'articulation de la pièce 10 aux autres pièces et il est possible de ne prévoir qu'une seule ouverture 15 ou aucune ouverture sur la bande 11'.

Chaque ouverture 15 qui traverse l'épaisseur est, dans l'exemple, de forme oblongue, orientée longitudinalement et arrondie à ses extrémités. Des parties de bande 17 bordent latéralement ces ouvertures 15. Avantageusement, on évite de former des arêtes sur le contour des ouvertures 15, ces arêtes pouvant fragiliser la pièce 10.

La bande est ensuite recourbée selon les flèches F de manière à joindre ses extrémités 11a. Pour joindre les extrémités 11a, on peut utiliser des techniques de couture, de collage, ou toute autre technique appropriée. Avantageusement, on utilise une technique d'implantation de fils de liaison entre les extrémités de la bande. Cette technique est décrite plus en détail ci-après.

Une fois la bande recourbée pour former une boucle et les extrémités 11a jointes, les ouvertures 15 situées à des extrémités opposées de la boucle, se font face.

Chaque ouverture 15 forme une fenêtre d'accès à un des espaces libres d'extrémité 14, de sorte qu'une pièce articulée à la pièce de l'invention peut être montée à l'intérieur de cette fenêtre, entre les parties de bande 17. Le levier inférieur 2, représenté figure 1B, est monté de cette manière par rapport au levier supérieur 3. Dans, ce cas, contrairement à ce qui est représenté figure 5, l'insert 16 ne s'étend pas sur toute la largeur de la préforme 11 mais peut être remplacé par deux inserts de largeur limitée, montés sur la face interne des parties de bande 17.

Lors de tests effectués sur des leviers de contre-fiche, on a pu constater que les parties centrale et périphérique de ces leviers étaient toutes deux soumises principalement à des efforts en traction et en compression, longitudinaux (i.e. des efforts s'exerçant principalement selon l'axe passant par les deux extrémités de la pièce). On a également pu constater que les efforts en traction les plus importants s'exerçaient sur la partie périphérique des leviers et que les efforts en compression les plus importants s'exerçaient sur la partie centrale des leviers.

Les efforts de traction s'exerçant sur la préforme périphérique 11 étant radiaux (par rapport à l'axe des espaces libres), avantageusement, les fibres de cette préforme sont orientées en majorité dans le sens de la longueur de la bande 11', de manière à favoriser la résistance mécanique longitudinale (lors du tissage ce sont les fils de chaîne qui sont orientés dans le sens de la longueur de la bande).

La préforme fibreuse centrale 13 est une poutre de section spécifique en H et la bande 11 repose sur les extrémités supérieures et inférieure des deux montants latéraux 9 parallèles du H. Les extrémités 13a de la préforme 13 s'inscrivent dans la surface d'un demi cylindre de révolution, ce qui permet de définir entre ces extrémités 13a et la bande 11 deux espaces libres sensiblement cylindriques. Avantageusement, l'axe de révolution desdits espaces libres est situé dans le plan contenant l'âme 8 de la préforme centrale 13 (l'âme 8 formant l'entretoise du H).

Les efforts les plus importants auxquelles la préforme centrale 13 est soumise sont des efforts de compression longitudinaux, s'exerçant entre les deux extrémités 13a. La section spécifique en H et les paramètres de tissage tridimensionnel (orientation et entrecroisement des fibres, répartition fils de chaîne et de trame, taux de fibre...) retenus tiennent compte de cette répartition d'effort.

Une fois les préformes 11 et 13 réalisées on les imbrique l'une dans l'autre en déposant 13 dans 11 et, avantageusement, on assemble celles-ci par couture, collage ou tout autre moyen approprié. De préférence, on utilise une technique d'implantation de fils consistant à implanter à travers les préformes 11 et 13 des fils de liaison, chaque fil de liaison étant implanté de manière à traverser chacune des préformes, au moins en partie.

Dans la pratique, chaque fil de liaison est mis en place en étant poussé par un fluide sous pression à l'intérieur d'une aiguille tubulaire animée de mouvements alternatifs au cours de chacun desquels elle pénètre à travers les parties des préformes 11 et 13 superposées et est retirée en laissant en place un fil de liaison, un autre fil de liaison étant mis en place après déplacement de l'aiguille. La préforme périphérique 11 peut ainsi être liée à la préforme centrale 13 en réalisant une pluralité de perforations dans lesquelles les fibres de liaison sont déposées. La profondeur des perforations (i.e. la profondeur de pénétration de l'aiguille) est choisie de manière que chaque fil de liaison traverse la préforme périphérique 11 et au moins une partie de la préforme centrale 13. Ce procédé est décrit en détail dans le document FR2565262.

On dispose ensuite les inserts à l'intérieur des espaces libres 14 d'extrémité. Les parois de ces espaces sont formées, d'une part, par les extrémités 13a au contour hémicylindrique de la préforme centrale 13 et, d'autre part, par les parties de bande 17 qui bordent latéralement les ouvertures 15 de la préforme périphérique 11.

On imprègne ensuite de résine les préformes fibreuses 11 et 13, de sorte que la résine pénètre les fibres et les noie. Les préformes doivent donc être perméables à la résine. Les préformes fibreuses forment alors les renforts fibreux (ou l'armature) du matériau composite et la résine forme la matrice de ce matériau.

Plusieurs procédés connus d'imprégnation de fibres avec de la résine peuvent être utilisés, parmi lesquels : le procédé de moulage par transfert de résine ou RTM, pour "Resin Transfert Molding", le procédé de moulage par transfert de résine assisté par le vide ou VARTM, pour "Vacuum Assisted Resin Transfert Molding", ou encore le procédé d'infusion sous vide ou VARI, pour "Vacuum Assisted Resin infusion".

Selon le procédé RTM, on place l'ensemble comprenant les préformes fibreuses 11 et 13 et les inserts 16 à l'intérieur d'un moule fermé dont la forme générale correspond à celle de la pièce mécanique à réaliser et on injecte une résine dans le moule. La résine pénètre alors l'ensemble formé par les préformes fibreuses. Bien entendu, on fait en sorte que la résine ne vienne pas remplir les espaces libres 14.

Avantageusement, on utilise de la résine époxy pour sa compatibilité avec les fibres de carbone et ses bonnes propriétés mécaniques. En durcissant, la résine permet de solidariser les inserts 16 au corps 12 de la pièce 10. On obtient après durcissement de la résine et démoulage, la pièce 10 représentée figure 2. Une étape d'usinage de finition peut être envisagée, si nécessaire.

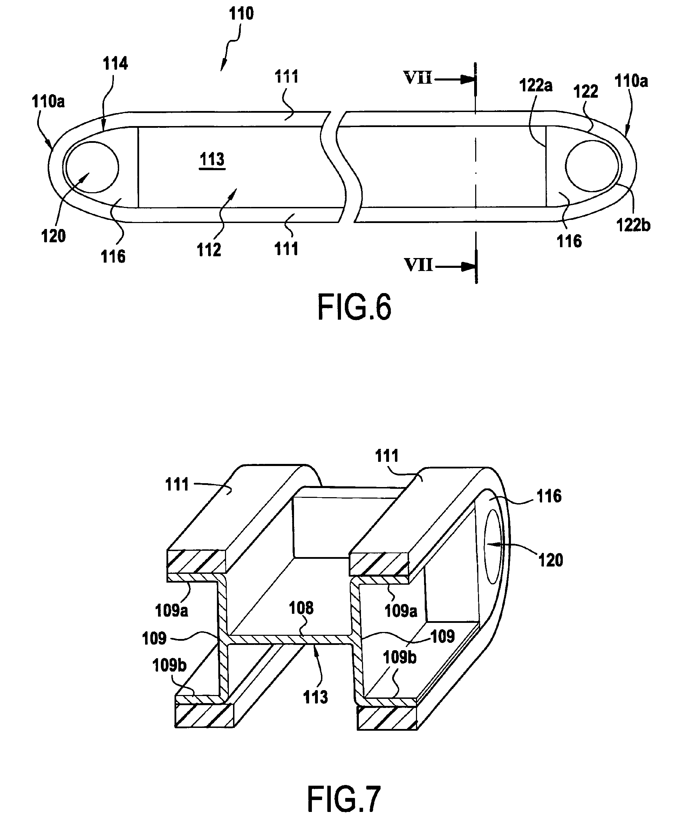

Les figures 6 et 7 représentent un autre exemple de pièce mécanique 110 selon l'invention pouvant être utilisée en tant que levier de contrefiche de train d'atterrissage. Les éléments de la pièce 110 ayant des fonctions analogues à celles des éléments des figures 2 à 5 sont affectés des mêmes références numériques augmentées de 100.

La pièce 110 est réalisée à partir d'un corps de pièce 112 allongé en matériau composite qui présente à ses extrémités 110a deux espaces libres 114 dédiés à l'articulation de la pièce 110 avec d'autres pièces (non représentées). Des inserts 116 sont logés dans lesdits espaces libres 114 et définissent des espaces libres cylindriques 120 aptes à recevoir des axes d'articulation, de sorte que les inserts 116 forment paliers pour ces axes.

Le corps de pièce 112 comprend une préforme fibreuse centrale 113 et deux préformes fibreuses périphériques 111 en tissu tridimensionnel, les préformes périphériques entourant la préforme centrale 113 de manière à laisser subsister aux extrémités 110a de la pièce, entre les préformes 111 et 113, les deux espaces libres 114.

Les préformes fibreuses 111 périphériques sont des bandes de tissu de mêmes longueurs, dont les deux extrémités sont jointes. Comparées à la préforme 11 précédemment décrite, les préformes 111 ne présentent pas d'ouverture 15 et sont moins larges.

La préforme fibreuse centrale 113 est une poutre de section spécifique en H et chaque bande 111 repose sur les extrémités supérieure et inférieure 109a et 109b de chaque montant latéral 109 du H. Ces extrémités supérieures 109a et inférieures 109b ne sont pas dans le prolongement du montant 109, mais rabattues vers l'extérieur. Les extrémités 109a et 109b sont sensiblement perpendiculaires au montant 109 de sorte qu'elles sont sensiblement parallèles à l'âme 108 (ou entretoise) de la préforme 113. les extrémités 109a et 109b, d'une part, et l'âme 108, d'autre part, sont situées des côtés opposés du plan défini par le montant 109.

Avantageusement, la largeur des bandes 111 correspond à celle des extrémités 109a et 109b et les bandes 111 sont fixées sur ces extrémités par tout moyen de fixation approprié et, de préférence, à l'aide de fils de liaison implantés, comme précédemment décrit.

Les extrémités de la préforme fibreuse centrale 113 sont planes, de sorte que les espaces libres 114 définis avec les bandes 111 ont un contour 122 tel que représenté figure 6. Ce contour 122 comprend une partie rectiligne 122a longeant la préforme 113 et une partie curviligne 122b longeant la courbure des bandes 111.

Les inserts 116 présentent une forme complémentaire de celle des espaces libres 114 et présentent donc une surface plane au contact des extrémités de la préforme centrale 113 et une surface incurvée recouverte, partiellement, par les bandes 111.

Cet exemple de réalisation permet de simplifier la forme et donc la réalisation (le tissage) des extrémités de la préforme centrale 113. Les inserts 116, généralement en alliage métallique, sont quant à eux facilement réalisables sous cette forme, par exemple par moulage. En outre, la quantité et fibres et de résine nécessaire à la réalisation de la pièce 110 est optimisée.

## Revendications

1. Pièce mécanique (10) comprenant au moins deux extrémités (10a) et destinée à être articulée avec d'autres pièces à ses extrémités, cette pièce étant réalisée, au moins en partie, en matériau composite, à partir d'une préforme fibreuse centrale (13) apte à résister plus particulièrement aux efforts de compression auxquels la pièce est soumise en fonctionnement, et d'au moins une préforme fibreuse périphérique (11) apte à résister plus particulièrement aux efforts de traction auxquels la pièce est soumise en fonctionnement, ladite préforme périphérique (11) entourant ladite préforme centrale (13) de manière à laisser subsister aux extrémités (10a) de la pièce, entre les deux préformes, deux espaces libres (14) dédiés à l'articulation desdites autres pièces, cette pièce étant **caractérisée en ce que** lesdites préformes centrale et périphérique (11, 13) sont réalisées par tissage tridimensionnel de torons de fibres de carbone, et **en ce que** lesdites préformes centrale et périphérique (11, 13) sont liées par des fils de liaisons implantés, chaque fil de liaison traversant chacune des préformes, au moins en partie.

2. Pièce mécanique selon la revendication 1, **caractérisée en ce que** ladite au moins une préforme fibreuse périphérique (11) est une bande dont les deux extrémités (11a) sont jointes.

3. Pièce mécanique selon la revendication 1 ou 2, **caractérisée en ce que** ladite préforme fibreuse centrale (13) présente une section spécifique en H, en 1 ou en X.

4. Pièce mécanique selon l'une quelconque des revendications 1 à 3, **caractérisée en ce qu**'elle comprend, en outre, des inserts (16) formant paliers, logés dans lesdits espaces libres (14).

5. Pièce mécanique selon l'une quelconque des revendications 2 à 4, **caractérisée en ce que** lesdites extrémités (11a) de la préforme fibreuse périphérique (11) sont jointes par couture.

6. Pièce mécanique selon l'une quelconque des revendications 1 à 5, **caractérisée en ce que** lesdites préformes centrales et périphériques (11, 13) sont noyées dans une matrice organique, de préférence de la résine époxy.

7. Pièce mécanique selon l'une quelconque des revendications précédentes, **caractérisée en ce que** ladite pièce (10) est un levier (2) de contrefiche de train d'atterrissage (1).

8. Train d'atterrissage comprenant une contrefiche (1), **caractérisé en ce qu**'au moins un des leviers (2) de cette contrefiche (1) est une pièce mécanique selon l'une quelconque des revendications précédentes.

9. Procédé de fabrication d'une pièce mécanique (10) comprenant au moins deux extrémités (10a) et destinée à être articulée avec d'autres pièces à ses extrémités, dans lequel on réalise une préforme fibreuse centrale (13) et au moins une préforme fibreuse périphérique 11 , on dispose ladite préforme périphérique (11) autour de ladite préforme centrale (13) de manière à laisser subsister aux extrémités de la pièce, entre lesdites préformes, deux espaces libres (14) dédiés à l'articulation desdites autres pièces, et on imprègne lesdites préformes fibreuses sèches d'une résine formant matrice, **caractérisé en ce qu**'on réalise lesdites préformes centrale et périphérique (11, 13) par tissage tridimensionnel de torons de fibres de carbone, et en ce qu'on assemble entre elles lesdites préformes centrales et périphériques (11, 13) lorsqu'elles sont sèches, au moyen de fils de liaisons implantés, chaque fil de liaison traversant chacune des préformes au moins en partie.

10. Procédé de fabrication d'une pièce mécanique selon la revendication 9, **caractérisé en ce que** ladite au moins une préforme fibreuse périphérique (11) est une bande présentant deux extrémités (11a) libres, et **en ce qu'**on joint par couture ces extrémités (11a) libres.

11. Procédé de fabrication d'une pièce mécanique selon la revendication 9 ou 10, **caractérisé en ce qu**'on dispose des inserts (16) dans lesdits espaces libres (14), avant l'étape d'imprégnation.

12. Procédé de fabrication d'une pièce mécanique selon l'une quelconque des revendications 9 à 11, **caractérisé en ce qu**'on dispose lesdites préformes centrales et périphériques dans un moule dont la forme générale correspond à celle de ladite pièce mécanique, et on injecte ladite résine dans ledit moule.

## Claims

1. A mechanical part (10) comprising at least two ends (10a) and designed to be hinged to other parts at its ends, said mechanical part being made, at least in part, of composite material, from a central fibre preform (13) suitable, more particularly, for withstanding the compression forces to which said part is subjected in operation, and at least one peripheral fibre preform (11) suitable, more particularly, for withstanding the traction forces to which said part is subjected in operation, said peripheral preform (11) surrounding said central preform (13) in such a manner as to leave two empty spaces (14) at the ends (10a) of the part and between the two preforms, which empty spaces are dedicated to hinging to said other parts, said mechanical part being **characterised in that** said central and peripheral preforms (11, 13) are made by three-dimensionally weaving carbon fibre strands and **in that** said central and peripheral preforms (11, 13) are bonded together by implanted link yarns, each link yarn passing through each of the preforms, at least in part.

2. A mechanical part according to claim 1, **characterised in that** said at least one peripheral fibre preform (11) is a strip whose two ends (11a) are united.

3. A mechanical part according to claim 1 or claim 2, **characterised in that** said central fibre preform (13) presents a specific H-, or I-, or X-shaped section.

4. A mechanical part according to any one of claims 1 to 3, **characterised in that** it further comprises inserts (16) forming bearings that are received in said empty spaces (14).

5. A mechanical part according to any one of claims 2 to 4, **characterised in that** said ends (11a) of the peripheral fibre preform (11) are united by stitching.

6. A mechanical part according to any one of claims 1 to 5, **characterised in that** said central and peripheral preforms (11, 13) are embedded in an organic matrix, preferably of epoxy resin.

7. A mechanical part according to any preceding claim, **characterised in that** said part (10) is a lever (2) of a landing gear brace (1).

8. A landing gear including a brace (1), **characterised in that** at least one of the levers (2) of said brace (1) is a mechanical part according to any preceding claim.

9. A method of manufacturing a mechanical part (10) comprising at least two ends (10a) and designed to be hinged to other parts at its ends, wherein a central fibre preform (13) and at least one peripheral fibre perform (11) are made, said peripheral preform (11) is placed around said central preform (13) in such a manner as to leave two empty spaces (14) at the ends of the part and between said preforms, said spaces being dedicated to hinging to said other parts, and said dry fibre performs are impregnated with a matrix-forming resin, the method being **characterised in that** said central and peripheral preforms (11, 13) are made by three- dimensionally weaving carbon fibre strands, and **in that** said central and peripheral performs (11, 13) are assembled together while they are dry, by implanted link yarns, each link yarn passing through each of the preforms, at least in part.

10. A method of manufacturing a mechanical part according to claim 9, **characterised in that** said at least one peripheral fibre preform (11) is a strip having two empty ends (11a), and **in that** said empty ends (11a) are united by stitching.

11. A method of manufacturing a mechanical part according to claim 9 or 10, **characterised in that** inserts (16) are placed in said empty spaces (14) prior to the impregnation step.

12. A method of manufacturing a mechanical part according to any one of claims 9 to 11, **characterised in that** said central and peripheral preforms are placed in a mould of general shape corresponding to the shape of said mechanical part, and said resin is injected into said mould.

## Patentansprüche

1. Mechanisches Teil (10) mit mindestens zwei Enden (10a) und dazu bestimmt, an seinen Enden mit anderen Teilen verbunden zu werden, wobei dieses Teil mindestens teilweise aus Verbundmaterial ausgeführt ist, und zwar mittels einer in der Mitte befindlichen faserstoffhaltigen Vorform (13), die insbesondere den Kompressionskräften, denen das Teil in Betrieb ausgesetzt ist, widerstehen kann und mindestens einer an der Peripherie befindlichen faserstoffhaltigen Vorform (11), die insbesondere den Zugkräften, denen das Teil in Betrieb ausgesetzt ist, widerstehen kann, wobei die an der Peripherie befindliche Vorform (11) die in der Mitte befindliche Vorform (13) derart umgibt, daß an den Enden (10a) des Teils zwischen den Vorformen zwei Freiräume (14) belassen bleiben, die zum Verbinden mit den anderen Teilen bestimmt sind, wobei das Teil **dadurch gekennzeichnet ist, daß** die in der Mitte und an der Peripherie befindlichen Vorformen (11, 13) durch dreidimensionales Weben von Kohlenstofffaserlitzen ausgeführt sind und **dadurch**, daß die in der Mitte und an der Peripherie befindlichen Vorformen (11, 13) durch implantierte Verbindungsfäden verknüpft sind, wobei jeder Verbindungsfaden mindestens teilweise jede der Vorformen durchquert.

2. Mechanisches Teil nach Anspruch 1, **dadurch gekennzeichnet, daß** mindestens eine an der Peripherie befindliche faserstoffhaltige Vorform (11) ein Band ist, dessen zwei Enden (11a) verbunden sind.

3. Mechanisches Teil nach Anspruch 1 oder 2, **dadurch gekennzeichnet, daß** die in der Mitte befindliche faserstoffhaltige Vorform (13) einen spezifischen Abschnitt in H-, 1- oder X-Form aufweist.

4. Mechanisches Teil nach einem der Ansprüche 1 bis 3, **dadurch gekennzeichnet, daß** es ferner Einsätze (16) umfaßt, die Lager bilden, die in den Freiräumen (14) untergebracht sind.

5. Mechanisches Teil nach einem der Ansprüche 2 bis 4, **dadurch gekennzeichnet, daß** die Enden (11a) der an der Peripherie befindlichen faserstoffhaltigen Vorform (11) durch Nähen verbunden sind.

6. Mechanisches Teil nach einem der Ansprüche 1 bis 5, **dadurch gekennzeichnet, daß** die in der Mitte und an der Peripherie befindlichen Vorformen (11, 13) in eine organische Matrix, vorzugsweise Epoxydharz, getaucht sind.

7. Mechanisches Teil nach einem der vorhergehenden Ansprüche, **dadurch gekennzeichnet, daß** das Teil (10) ein Hebel (2) einer Strebe (1) eines Fahrgestells ist.

8. Fahrwerk mit einer Strebe (1), **dadurch gekennzeichnet, daß** mindestens einer der Hebel (2) dieser Strebe (1) ein mechanisches Teil nach einem der vorhergehenden Ansprüche ist.

9. Verfahren zur Herstellung eines mechanischen Teils (1) mit mindestens zwei Enden (10a), das dazu bestimmt ist, an seinen Enden mit anderen Teilen verbunden zu werden, wobei man eine in der Mitte befindliche faserstoffhaltige Vorform (13) und mindestens eine an der Peripherie befindliche faserstoffhaltige Vorform (11) ausführt und die an der Peripherie befindliche Vorform (11) um die in der Mitte befindliche Vorform (13) derart anordnet, daß an den Enden des Teils zwischen den Vorformen zwei Freiräume (14) belassen bleiben, die zum Verbinden mit den anderen Teilen bestimmt sind, und in welchem man die trockenen, faserstoffhaltigen Vorformen mit einem eine Matrix bildenden Harz imprägniert, **dadurch gekennzeichnet, daß** man die in der Mitte und an der Peripherie befindlichen Vorformen (11, 13) durch dreidimensionales Weben von Kohlenstofffaserlitzen ausführt und daß man die in der Mitte und an der Peripherie befindlichen Vorformen (11, 13), wenn sie trocken sind, mittels implantierter Verbindungsfäden miteinander zusammenfügt, wobei jeder Verbindungsfaden mindestens teilweise jede der Vorformen durchquert.

10. Verfahren zur Herstellung eines mechanischen Teils nach Anspruch 9, **dadurch gekennzeichnet, daß** das Teil, welches mindestens eine an der Peripherie befindliche faserstoffhaltige Vorform (11) aufweist, ein Band ist, daß zwei freie Enden (11a) aufweist und **dadurch**, daß diese freien Enden (11a) durch Nähen verbunden werden.

11. Verfahren zur Herstellung eines mechanischen Teils nach Anspruch 9 oder 10, **dadurch gekennzeichnet, daß** Einsätze (16) in den Freiräumen (14) vor dem Imprägnierschritt angeordnet werden.

12. Verfahren zur Herstellung eines mechanischen Teils nach Anspruch 9 bis 11, **dadurch gekennzeichnet, daß** die in der Mitte und an der Peripherie befindlichen Vorformen in einem Werkzeug angeordnet sind, dessen allgemeine Form der des mechanischen Teils entspricht und daß das Harz in das Werkzeug gespritzt wird.
